# EUROPÄISCHE PATENTSCHRIFT

(11) **EP 3 535 138 B1**
(45) Veröffentlichungstag und Bekanntmachung des Hinweises auf die Patenterteilung: **07.10.2020**
(21) Anmeldenummer: 17757514.9
(22) Anmeldetag: 22.08.2017
(51) Int. Cl.: B60C 11/04, B60C 11/03

(54) **FAHRZEUGLUFTREIFEN**
PNEUMATIC TIRE
PNEUMATIQUE

(30) Priorität: 01.11.2016 DE 102016221429
(43) Veröffentlichungstag der Anmeldung: 11.09.2019
(73) Patentinhaber: Continental Reifen Deutschland GmbH, 30165 Hannover (DE)
(72) Erfinder: RITTWEGER, Stefan, 30826 Garbsen (DE)
(74) Vertreter: Finger, Karsten
(86) Internationale Anmeldenummer: PCT/EP2017/071065
(87) Internationale Veröffentlichungsnummer: WO 2018/082822

(56) Entgegenhaltungen:
- DE-A1-102012 108 383
- DE-A1-102014 224 032

## Beschreibung

Die Erfindung betrifft ein Laufstreifenprofil eines Fahrzeugluftreifens - insbesondere eines PKW-Fahrzeugluftreifens - mit wenigstens einer Umfangsrippe, die in radialer Richtung R nach außen hin von einer die Bodenkontaktfläche bildenden, radial äußeren Oberfläche und in axialer Richtung A von zwei Umfangsrillen begrenzt wird, wobei in der Umfangsrippe querverlaufende Rillen ausgebildet sind, welche sich ausgehend von der einen Umfangsrille in einem ersten axialen Erstreckungsabschnitt bis zu einer Gabelstelle erstrecken, in welcher sich die Rille in zwei Rillenarme teilt, wobei die Rille in ihrem Erstreckungsverlauf in beiden Rillenarmen mit Abstand zu beiden Umfangsrillen endet, und wobei die axiale Richtungskomponente der Erstreckungsrichtung der Rille in ihrem ersten Erstreckungsabschnitt größer ist als die Richtungskomponente in Umfangsrichtung U.

Derartige Fahrzeugluftreifen sind bekannt. Besonders bei Pkw-Reifen mit Sommerprofil ist es wünschenswert zur Erzielung guter Handling-Eigenschaften im Profil Umfangsrippen auszubilden, welche durch Umfangsrillen axial begrenzt sind. Die Umfangsrippen ermöglichen dabei die Ausbildung einer hohen Umfangs- und Quersteifigkeit zur Übertragung von Traktions- und Bremskräften sowie von für gutes Handling wichtigen Querkräften. Gerade zur Erzielung besonders guter Handling-Eigenschaften ist es dabei wünschenswert, die Umfangsrippen besonders breit auszubilden. Diese Ausbildung erschwert jedoch die Entwässerung aus dem Profilabschnitt der Umfangsrippe, wodurch Aquaplaning-Eigenschaften negativ beeinflusst werden.

Um die Entwässerung im Bereich der Umfangsrippen zu verbessern, ist es daher bekannt, in Umfangsrippen quer verlaufende Rillen auszubilden, welche sich im Wesentlichen in axialer Richtung A erstrecken und im Abstand von der zweiten Umfangsrille enden. Hierdurch kann über die Querrille eine Entwässerung in die eine Umfangsrille ermöglicht werden und durch die Ausbildung des Erstreckungsendes im Abstand von der zweiten Umfangsrille noch eine Grundsteifigkeit der Rippe zur Übertragung von Handling und Traktions- und Bremseigenschaften sichergestellt werden. Allerdings ist die Entwässerungsmöglichkeit begrenzt. Diese kann erhöht werden durch besonders dicht über den Umfang hintereinander angeordnete Querrillen. Die dichte Anordnung führt jedoch zur Reduktion der Steifigkeit der Umfangsrippe, wodurch Traktions-, Brems- und Handling-Eigenschaften, insbesondere auf trockener Straße negativ beeinflusst werden. Darüber hinaus wird durch die rein quer verlaufende Ausbildung der Querrillen die Geräuschbildung negativ beeinflusst.

Es ist auch - beispielsweise von der JP 2006-14 31 39 A - bekannt in Umfangsrippen Querrillen auszubilden, welche sich im Wesentlichen von einer ersten Umfangsrille ausgehend bis in einen Abstand von der zweiten Umfangsrille unter leichter Krümmung im Wesentlichen in axialer Richtung A erstrecken und bei denen im Abstand von ihrem Erstreckungsende eine Rillenarm abzweigt, der in seinem Verlauf ebenfalls noch mit axialer Richtungskomponente weiter zur zweiten Umfangsrille hin erstreckt ist, aber mit einer größeren Umfangsrichtungskomponente ihrer Erstreckungsrichtung ausgebildet ist. Die Rillen ermöglichen zwar eine zusätzliche Aufnahme von Wasser aus einem weiten Erstreckungsbereich der Umfangsrippe. Aufgrund der langen im Wesentlichen axialen Erstreckung der Querrille über deren gesamten Erstreckung bis zu deren Erstreckungsende wird die Quersteifigkeit dennoch eingeschränkt und die Handling-Eigenschaft negativ beeinträchtigt. Verstärkt wird dies durch die ebenfalls noch zur zweiten Umfangsrille hin ausgerichtete axiale Erstreckungskomponente der abzweigenden Rille. Die kontinuierlich verlaufende axial erstreckte Ausbildung der Querrille über deren gesamte Erstreckung sowohl vor als auch hinter der Abzweigung wird die unangenehme Geräuschbildung beim Abrollen des Laufstreifens im Bereich der Querrille trotz guter Abriebeigenschaften begünstigt.

Aus der EP 2 340 949 B1 ist es bekannt, Umfangsrippen mit Querrillen auszubilden, die im Anschluss an einen langen in axialer Richtung A erstreckten ersten Erstreckungsabschnitt mit einem gegabelt ausgebildeten Erstreckungsende ausgebildet sind, wobei in der Position der Gabelstelle beide Rillenarme jeweils mit weiterhin großer axialer Richtungskomponente ihrer Erstreckungsrichtung und lediglich mit einer zueinander entgegengesetzten Umfangsrichtungskomponente ausgebildet sind. Die Ausbildung ermöglicht eine gute Wasseraufnahme und Ableitung. Die Ausbildung der relativ groß ausgebildeten axialen Richtungskomponenten aller Rillenabschnitte sowohl vor als auch hinter der Abzweigung ermöglicht noch Einschränkungen hinsichtlich einer geringen Geräuschbildung.

**Aus der** DE 10 2014 224 032 A1 **ist ein Laufstreifenprofil gemäß den Merkmalen des Oberbegriffs des Anspruch 1 bekannt.**

Der Erfindung liegt die Aufgabe zugrunde, bei einem derartigen Laufstreifenprofil mit einfachen Mitteln zu ermöglichen, sowohl gute Handling-Eigenschaften als auch gute Aquaplaning-Eigenschaften bei verbessertem Geräuschverhalten umzusetzen.

Die Aufgabe wird erfindungsgemäß durch die Ausbildung eines Laufstreifenprofils eines Fahrzeugluftreifens - insbesondere eines PKW-Fahrzeugluftreifens - mit wenigstens einer Umfangsrippe, die in radialer Richtung R nach außen hin von einer die Bodenkontaktfläche bildenden, radial äußeren Oberfläche und in axialer Richtung A von zwei Umfangsrillen begrenzt wird, wobei in der Umfangsrippe querverlaufende Rillen ausgebildet sind, welche sich ausgehend von der einen Umfangsrille in einem ersten axialen Erstreckungsabschnitt bis zu einer Gabelstelle erstrecken, in welcher sich die Rille in zwei Rillenarme teilt, wobei die Rille in ihrem Erstreckungsverlauf in beiden Rillenarmen mit Abstand zu beiden Umfangsrillen endet, wobei die axiale Richtungskomponente der Erstreckungsrichtung der Rille in ihrem ersten Erstreckungsabschnitt größer ist als die Richtungskomponente in Umfangsrichtung U, gemäß den Merkmalen von Anspruch 1 gelöst, bei dem die Rille im ersten der beiden Rillenarme ausgehend von der Gabelstelle in Umfangsrichtung U erstreckt ausgebildet ist, und bei dem die Rille im zweiten Rillenarm ausgehend von der Gabelstelle mit einer Erstreckungsrichtung mit axialer Richtungskomponente und mit in Umfangsrichtung U ausgerichteter Richtungskomponente ausgebildet ist, wobei die axiale Richtungskomponente kleiner ist als die axiale Richtungskomponente der Erstreckungsrichtung der Rille im ersten Erstreckungsabschnitt, **wobei die Rille längs ihrer Erstreckung im Erstreckungsverlauf des ersten Rillenarms von der Gabelstelle ausgehend bis zu ihrem Erstreckungsende mit einer stetig abnehmenden Tiefe T3 ausgebildet ist.**

Die Ausbildung ermöglicht weiterhin den Einsatz von Umfangsrippen mit hoher Umfangssteifigkeit, da unter anderem weiterhin ein Abstand zwischen dem Erstreckungsende der Querrillen und der zweiten Umfangsrille sichergestellt bleibt. Die Ausbildung der Umfangsrillen mit ihren beiden Rillenarmen ermöglicht eine hohe Aufnahmekapazität von Wasser und dessen Ableitung durch die Rille in die erste Umfangsrille, wobei die Ausbildung mit dem ersten in Umfangsrichtung erstreckten Rillenarm durch deren einzige Richtungskomponente in Umfangsrichtung auch eine optimale Entwässerung über einen großen Umfangserstreckungsabschnitt der Umfangsrippe ermöglicht. Die Dichte der in Umfangsrichtung hintereinander angeordneten quer verlaufenden Rillen kann hierdurch begrenzt werden, was sich wiederum positiv auf die Steifigkeit der Umfangsrippe auswirkt. Die Ausbildung des ersten Rillenarms in Umfangsrichtung und des zweiten Rillenarms mit sowohl axialer als auch mit Umfangsrichtungskomponente, wobei die axiale Richtungskomponente kleiner ist als die axiale Richtungskomponente der Rille im ersten Erstreckungsabschnitt, ermöglicht dabei eine Reduktion der Geräuschbildung. Zwischen Rillenabschnitten eingeschlossene, in Umfangsrichtung gerichtete Profilspitzen und das Aufschlagen von im Wesentlichen in axialer Richtung erstreckten, zwischen Rillenwänden und radial äußerer Oberfläche der Umfangsrippe ausgebildeten Kanten kann weitgehend vermieden werden. Beides begünstigt eine Minimierung der Geräuschbildung. Somit kann Geräuschbildung deutlich reduziert werden. Der rein in Umfangsrichtung erstreckte Rillenabschnitt des ersten Rillenarms ist dabei optimal für eine geringe Geräuschbildung. Die größeren axialen Erstreckungsrichtungskomponenten im ersten Erstreckungsabschnitt der Rille und im zweiten Rillenarm ohne Ausbildung von Profilspitzen ermöglichen darüber hinaus einen besonders gleichmäßigen Abrieb. **Durch die Ausbildung der stetig abnehmenden Tiefe T₃ kann der in Umfangsrichtung erstreckte erste Rillenarm stabilisiert und die Aufnahme des Wassers weiter optimiert werden, da die Tiefe und das Aufnahmevolumen entsprechend den Erfordernissen an die Aufnahmekapazität der Rillenbereiche abgestimmt bereitgestellt wird.**

Besonders vorteilhaft ist die Ausbildung eines Fahrzeugreifens gemäß den Merkmalen von Anspruch 2, wobei die Rille längs ihrer Erstreckung im Erstreckungsverlauf des ersten

Rillenarms von der Gabelstelle ausgehend bis zu ihrem Erstreckungsende mit einer kontinuierlich abnehmenden Tiefe T₃ ausgebildet ist. Hierdurch kann der in Umfangsrichtung erstreckte erste Rillenarm stabilisiert und die Aufnahme des Wassers weiter optimiert werden, da die Tiefe und das Aufnahmevolumen entsprechend den Erfordernissen an die Aufnahmekapazität der Rillenbereiche abgestimmt bereitgestellt wird.

Besonders vorteilhaft ist die Ausbildung eines Fahrzeugreifens gemäß den Merkmalen von Anspruch 3, wobei die Rille längs ihrer Erstreckung im Erstreckungsverlauf des zweiten Rillenarms mit einer - insbesondere konstanten - Tiefe T₂ und längs ihrer Erstreckung im ersten Erstreckungsabschnitt mit einer maximalen Tiefe T₁ mit T₂ > T₁ ausgebildet ist. Hierdurch kann eine besonders stabile Ausbildung der Umfangsrippe umgesetzt werden, wodurch die Trockeneigenschaften des Reifens weiter begünstigt werden.

Besonders vorteilhaft ist die Ausbildung eines Fahrzeugreifens gemäß den Merkmalen von Anspruch 4, wobei die Tiefe T₃ in ihrem Maximalwert T₃ₘₐₓ mit T₃ₘₐₓ ≤ T₂ ausgebildet ist.

Besonders vorteilhaft ist die Ausbildung eines Fahrzeugreifens gemäß den Merkmalen von Anspruch 5, wobei der erste Rillenarm an der Gabelstelle in den zweiten Rillenarm mündet. Durch diese Ausbildung können die Nässeeigenschaften bei guten Trockeneigenschaften weiter verbessert werden.

Besonders vorteilhaft ist die Ausbildung eines Fahrzeugreifens gemäß den Merkmalen von Anspruch 6, wobei die Rille in radialer Richtung R nach innen hin durch einen Rillengrund begrenzt wird, wobei in der Position der Einmündung des ersten Rillenarms in den zweiten Rillenarm der Rillengrund in radialer Richtung R unter Bildung einer Stufe der Stufenhöhe ΔT = (T₂-T₃ₘₐₓ) mit 0mm≤ ΔT ≤ 1mm abgesenkt ist. Hierdurch kann der Verzweigungsbereich der Rille in einfacher Weise zusätzlich stabilisiert werden.

Besonders vorteilhaft ist die Ausbildung eines Fahrzeugreifens gemäß den Merkmalen von Anspruch 7, wobei die Tiefe T₂ mit 5mm≤ T₂≤ (P_{T} - 1mm) ausgebildet ist, wobei P_{T} die maximale Profiltiefe in der ersten Umfangsrille ist, und wobei insbesondere die Tiefe T₁ mit 2mm≤ T₁≤ (0,5 P_{T}) ausgebildet ist. Hierdurch kann die Wasseraufnahme optimiert werden und durch die Ausbildung der Tiefe T₁ die Anbindung des Gummimaterials der Umfangsrippe durch die Rille hindurch zur Übertragung von Kräften zusätzlich optimiert werden.

Besonders vorteilhaft ist die Ausbildung eines Fahrzeugreifens gemäß den Merkmalen von Anspruch 8, wobei die Tiefe T₃ am von der Gabelstelle wegweisenden Erstreckungsende des ersten Rillenarms mit ihrem Minimalwert T₃ₘᵢₙ mit T₃ₘᵢₙ ≥ 1mm ausgebildet ist. Hierdurch kann in einfacher Weise sichergestellt werden, dass die Rille in dem hinsichtlich des Abriebes besonders empfindlichen ersten Lebensabschnitt des neuen Reifens unverändert bleibt.

Besonders vorteilhaft ist die Ausbildung eines Fahrzeugreifens gemäß den Merkmalen von Anspruch 9, wobei die Rille zwischen ihrer Erstreckungsrichtung im ersten Erstreckungsabschnitt und im ersten Rillenarm einen Winkel α mit 45°≤α≤90° und zwischen ihrer Erstreckungsrichtung im ersten Rillenarm und im zweitem Rillenarm einen Winkel β mit 110°≤β≤150°einschließt. Die Ausbildung des Winkels α ermöglicht eine Optimierung der Rille hinsichtlich eines guten Abriebes, die Ausbildung des Winkels β ermöglicht dabei eine Optimierung der Rille hinsichtlich einer reduzierten Geräuschentwicklung und guter Nässeeigenschaften. Somit kann durch diese Ausbildung die Rille hinsichtlich Abrieb, Nässeeigenschaften und Geräuschentwicklung optimiert werden.

Die Erfindung wird im Folgenden an Hand der in den Figuren 1 bis 7 dargestellten Ausführungsbeispiele näher erläutert. Hierin zeigen
- Fig.1: einen Umfangsabschnitt eines Laufstreifenprofils in Draufsicht,
- Fig.2: das Laufstreifenprofil von Fig.2 in Schnittdarstellung gemäß Schnitt II-II von Fig.1,
- Fig.3: das Laufstreifenprofil von Fig.1 in Schnittdarstellung gemäß Schnitt III-III von Fig.1,
- Fig.4: das Laufstreifenprofil von Fig.1 in Schnittdarstellung gemäß Schnitt IV-IV von Fig.1,
- Fig.5: das Laufstreifenprofil von Fig.1 in Schnittdarstellung gemäß Schnitt V-V von Fig.1,
- Fig.6: das Laufstreifenprofil von Fig.1 in Schnittdarstellung gemäß Schnitt VI-VI von Fig.1 und
- Fig.7: das Laufstreifenprofil von Fig.1 in Schnittdarstellung gemäß Schnitt VII-VII von Fig.1.

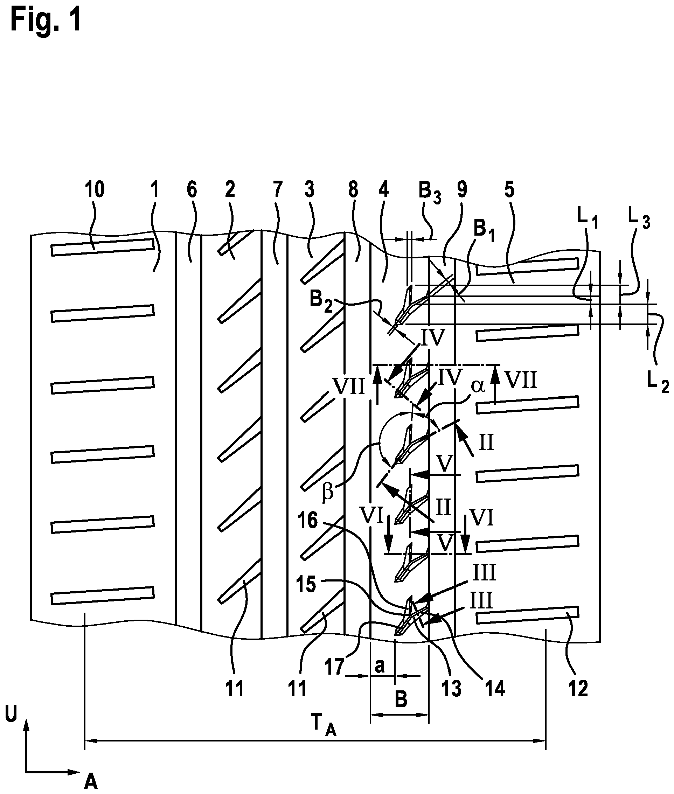

Die Figuren 1 bis 7 zeigen ein Laufstreifenprofil eines Fahrzeugluftreifens eines Personenkraftwagens (Pkw) mit Sommerreifenprofil.

Das Laufstreifenprofil ist - wie in Fig.1 dargestellt ist - in bekannter Weise aus mehreren in axialer Richtung A des Fahrzeugluftreifens nebeneinander angeordneten, über den gesamten Umfang des Fahrzeugluftreifens erstreckten und in Umfangsrichtung U des Fahrzeugluftreifens ausgerichteten Umfangsrippen 1, 2, 3, 4 und 5 ausgebildet. Die Umfangsrippen 1 und 5 sind dabei - in bekannter Weise - in den beiden Reifenschultern ausgebildete Schulterrippen. Die Umfangsrippen 2, 3 und 4 sind in axialer Richtung A des Fahrzeugluftreifens zwischen diesen beiden Umfangsrippen 1 und 5 angeordnet. Die benachbart angeordneten Umfangsrippen 1 und 2 sind dabei in axialer Richtung A durch eine über den gesamten Umfang des Fahrzeugluftreifens erstreckte und in Umfangsrichtung U ausgerichtete Umfangsrille 6 voneinander getrennt. Die benachbart angeordneten Umfangsrippen 2 und 3 sind in axialer Richtung A durch eine über den gesamten Umfang des Fahrzeugluftreifens erstreckte und in Umfangsrichtung U ausgerichtete Umfangsrille 7 voneinander getrennt. Die benachbart angeordneten Umfangsrippen 3 und 4 sind in axialer Richtung A durch eine über den gesamten Umfang des Fahrzeugluftreifens erstreckte und in Umfangsrichtung U ausgerichtete Umfangsrille 8 voneinander getrennt. Die benachbart angeordneten Umfangsrippen 4 und 5 sind in axialer Richtung A durch eine über den gesamten Umfang des Fahrzeugluftreifens erstreckte und in Umfangsrichtung U ausgerichtete Umfangsrille 9 voneinander getrennt.

In Figur 1 ist die Bodenaufstandsbreite T_{A} des Fahrzeugreifens im montierten Zustand des Fahrzeugreifens unter Normbedingungen eingezeichnet. Die Bodenaufstandsbreite erstreckt sich in axialer Richtung A aus dem axialen Erstreckungsbereich der Umfangsrippe 1 bis in den axialen Erstreckungsbereich der Umfangsrippe 5.

In den Umfangsrippen 1 und 5 sind über den Umfang des Fahrzeugluftreifens verteilt hintereinander jeweils Querrillen 10 bzw. 12 ausgebildet. Die Querrillen 10 sind dabei mit Abstand zur Umfangsrille 6 in der Umfangsrippe 1 positioniert und erstrecken sich in axialer Richtung A bis in eine Position außerhalb der Bodenaufstandsbreite T_{A}. Die Querrillen 12 sind mit Abstand zur Umfangsrille 9 in der Umfangsrippe 5 angeordnet und erstrecken sich in axialer Richtung A bis in eine Position außerhalb der Aufstandsbreite T_{A}. In der Umfangsrippe 2 und in der Umfangsrippe 3 sind in bekannter Weise über den Umfang verteilt hintereinander angeordnete und jeweils von einander beabstandete, schräg verlaufende Querrillen 11 ausgebildet. Die in der Umfangsrippe 2 ausgebildeten Querrillen 11 erstrecken sich dabei ausgehend von der Umfangsrille 7 in axialer Richtung A bis in eine Position im Abstand zur Umfangsrille 6 in die Umfangsrippe 2 hinein und enden dort. Die in der Umfangsrippe 3 ausgebildeten Querrillen 11 erstrecken sich ausgehend von der Umfangsrille 8 in axialer Richtung A bis in eine Position im Abstand von der Umfangsrille 7 in die Umfangsrippe 3 hinein und enden dort.

In der Umfangsrippe 4 sind - wie in Fig.1 dargestellt ist - über den Umfang des Fahrzeugluftreifens verteilt, hintereinander angeordnete Querrillen 13 ausgebildet.

Die Umfangsrippen 1, 2, 3, 4 und 5 sind in radialer Richtung R nach außen hin durch eine radial äußere Oberfläche 19 begrenzt, welche innerhalb die Bodenaufstandsbreite T_{A} die Bodenkontaktoberfläche bildende Mantelfläche des Reifens bildet.

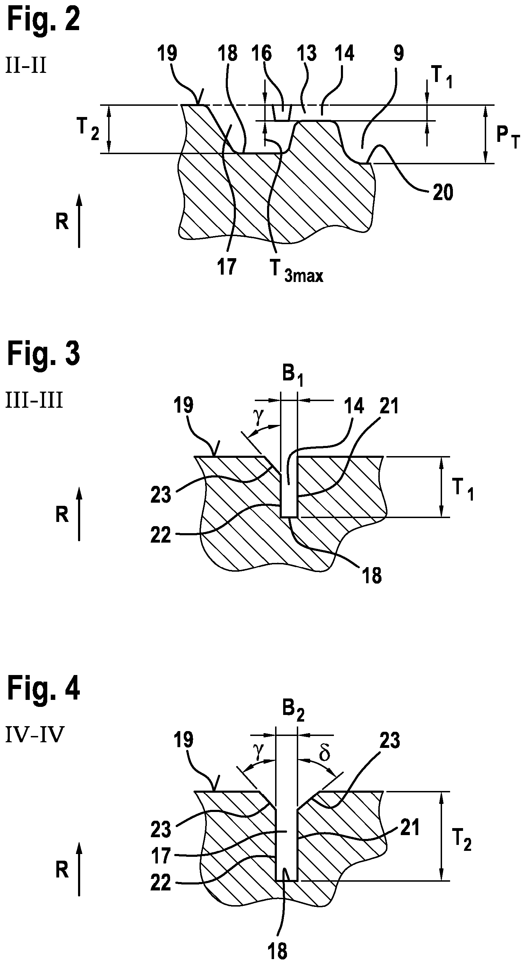

Die Umfangsrillen 6, 7, 8 und 9 sowie die Querrillen 10, 11, 12 und 13 sind in radialer Richtung R nach innen hin jeweils durch einen Rillengrund begrenzt, welcher sich über die gesamte Erstreckung der jeweiligen Rille erstreckt. Die Rillen 13 sind dabei in radialer Richtung R nach innen hin - wie in den Figuren 2 bis 6 dargestellt ist - durch einen Rillengrund 18 begrenzt.

Die Umfangsrillen 6, 7, 8 und 9 sowie die Querrillen 10, 11, 12 und 13 werden jeweils beiderseits ihres Rillengrundes durch Rillenwände begrenzt, welche sich in radialer Richtung R ausgehend vom jeweiligen Rillengrund bis zur radial äußeren Oberfläche der jeweiligen Umfangsrippe 1,2,3,4 bzw. 5 erstreckt.

Die Umfangsrippe 4 wird in axialer Richtung jeweils durch eine Flanke begrenzt. Dabei bildet die zur Umfangsrippe 4 hin die Umfangsrille 8 begrenzende Rillenwand die zur Umfangsrille 8 hinweisende Flanke der Umfangsrippe 4. Ebenso bildet die zur Umfangrippe 4 hinweisende Rillenwand der Umfangsrille 9 die zur Umfangsrille 9 hinweisende Flanke der Umfangsrippe 4.

Die Querrillen 10, 11, 12 und 13 werden dabei beiderseits ihres jeweiligen Rillengrundes jeweils durch eine Rillenwand 21 bzw. 22 begrenzt.

Wie in Fig.1 dargestellt ist, sind die Rillen 13 von der Umfangsrille 9 ausgehend jeweils mit einem ersten Erstreckungsabschnitt 14 ausgebildet, welcher sich zwischen der Umfangsrille 9 und einer Gabelstelle 15 erstreckt. In der Gabelstelle 15 teilt sich die Rille 13 in ihrem Erstreckungsverlauf in einen ersten Rillenarm 16 und in einen zweiten Rillenarm 17.

Die Rille 13 ist dabei in ihrem ersten Erstreckungsabschnitt 14 mit einer ausgehend von der radial äußeren Oberfläche 19 der Umfangsrippe 4 bis zum Rillengrund 18 in radialer Richtung R gemessenen Tiefe T₁ ausgebildet, welche - wie in Fig.2 dargestellt ist - längs ihrer Erstreckung der Rille 13 im ersten Erstreckungsabschnitt im Wesentlichen konstant ist. Im ersten Erstreckungsabschnitt 14 zwischen Umfangsrille 9 und Gabelstelle 15 erstreckt sich die Rille 13 in der radial äußeren Oberfläche 19 im Wesentlichen geradlinig mit einer Erstreckungsrichtung, welche sowohl eine axiale Richtungskomponente als auch eine Umfangsrichtungskomponente aufweist. Die axiale Richtungskomponente ist dabei größer als die Umfangsrichtungskomponente ausgebildet.

Die Rille 13 ist im weiteren Verlauf ab der Gabelstelle 15 in Richtung zur Umfangsrille 8 hin in ihrem zweiten Rillenarm 17 - wie in Fig.2 dargestellt ist - mit einer längs der Erstreckung des zweiten Rillenarms 17 Tiefe T₂ mit T₂ > T₁ ausgebildet, welche längs der Erstreckung des zweiten Rillenarmes im Wesentlichen konstant ist. Im zweiten Rillenarme 17 erstreckt sich die Rille 13 in der radial äußeren Oberfläche 19 im Wesentlichen geradlinig mit einer Erstreckungsrichtung, welche ebenfalls sowohl eine axiale Richtungskomponente als auch eine Umfangsrichtungskomponente aufweist, wobei die Umfangsrichtungskomponente größer ist als die Umfangsrichtungskomponente der Erstreckungsrichtung der Rille 13 im ersten Erstreckungsabschnitts 14 und wobei die axiale Richtungskomponente kleiner ist als die axiale Richtungskomponente der Erstreckungsrichtung der Rille 13 im ersten Erstreckungsabschnitt 14. Die Rille 13 erstreckt sich im zweiten Rillenarm 17 ausgehend von der Gabelstellte 15 bis in eine Position im Abstand a von der Rille 8 - gemessen in der radial äußeren Oberfläche 19 - und endet dort. Dabei ist die Rille 13 längs ihrer Erstreckung ausgehend von der Umfangsrille 9 in ihrem ersten Erstreckungsabschnitt 14 und ihrem anschließenden zweiten Rillenarm 17 unter Bildung eines Knicks in der Gabelstelle 15 bis zum Erstreckungsende des zweiten Rillenarms 17 mit gleicher Umfangsorientierung ausgebildet.

Die Rille 13 ist in ihrem ersten Rillenarm 16 mit Erstreckungsrichtung in Umfangsrichtung U des Fahrzeugluftreifens ausgerichtet und mündet in der Position der Gabelung 15 in den zweiten Rillenarm 17.

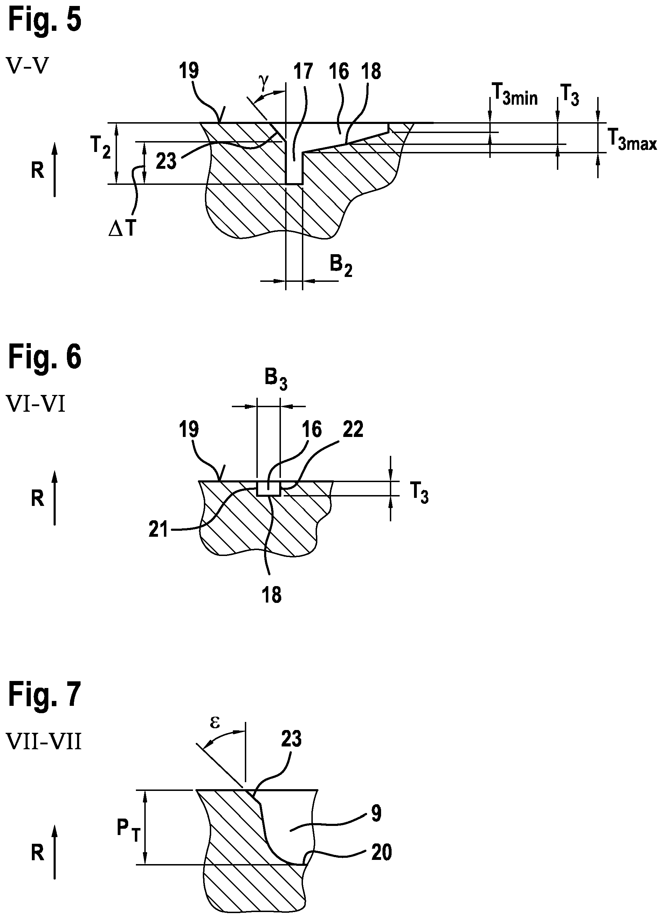

Dabei ist der erste Rillenarm 16 längs seiner Erstreckung ausgehend von der Position seiner Einmündung in den zweiten Rillenarm 17 an der Gabelung 17 bis zu seinem Erstreckungsende mit einer kontinuierlich abnehmenden Tiefe T₃ ausgebildet - wie in den Figuren 5 und 6 zu erkennen ist -. Dabei ist die Rille 13 in ihrem Erstreckungsbereich des ersten Rillenarmes 16 an der Position der Einmündung des ersten Rillenarms 16 in den Rillenarm 17 mit ihrer maximalen Tiefe T₃ₘₐₓ ihres Tiefenverlaufes der Tiefe T₃ ausgebildet und an ihrem vom zweiten Rillenarm 17 wegweisenden Erstreckungsende des ersten Rillenarmes 16 mit einer minimalen Tiefe T₃ₘᵢₙ. Dabei ist T₃ₘₐₓ mit T₃ₘₐₓ ≤ T₂ ausgebildet.

Der Rillengrund 18 der Rille 13 ist somit im ersten Rillenarm 16 rampenförmig ausgebildet, wobei die Rampe ausgehend von der Position der Einmündung des ersten Rillenarms 16 in den zweiten Rillenarm 17 bis zum Erstreckungsende des Rillenarms 16 kontinuierlich ansteigt.

In den Figuren ist ein Ausführungsbeispiel dargestellt, bei welchem der Rillengrund 18 der Rille 13 im an der Einmündung des ersten Rillenarms 16 in den zweiten Rillenarm 17 im Übergang vom ersten Rillenarm 16 zum zweiten Rillenarm 18 stufenförmig abgesenkt ist, wobei in diesem Ausführungsbeispiel die Tiefe T₃ₘₐₓ mit T₃ₘₐₓ < T₂ und die in radialer Richtung R gemessene Stufenhöhe ΔT mit ΔT = (T₂ - T₃ₘₐₓ) > 0 ausgebildet ist.

In den oben dargestellten und beschriebenen Ausführungsbeispielen ist die Tiefe T₂ mit 5mm ≤ T₂ ≤ (P_{T} - 1mm) ausgebildet, wobei P_{T} die Profiltiefe ist, die der maximalen in der Umfangsrille 4 gemessene Rillentiefe entspricht. Die Tiefe T₁ ist mit 2mm ≤ T₁ ≤ (0,5 P_{T}) ausgebildet. Die Tiefe T₃ₘᵢₙ ist mit 1mm ≤ T₃ₘᵢₙ ausgebildet. Die Stufenhöhe ΔT ist mit 0mm ≤ ΔT ≤ 1mm ausgebildet.

Beispielsweise ist P_{T} = 8mm, T₂ = 6mm, T₁ = 4mm, ΔT = 1mm und T₃ₘᵢₙ = 1,5mm gewählt ausgebildet.

Die Rille 13 ist in ihrem Erstreckungsabschnitt 14 in der radial äußeren Oberfläche 19 mit einer Breite B₁, im ersten Rillenarm 16 mit einer Breite B₃ und im zweiten Rillenarm 17 mit einer Breite B₂ ausgebildet, welche jeweils in der radial äußeren Oberfläche 19 senkrecht zum jeweiligen Erstreckungsverlauf der Rille 13 gemessen wird. Die Breite B₁ ist mit 1mm ≤ B₁ ≤ 5mm, die Breite B₂ ist mit 1mm ≤ B₂ ≤ 5mm und Breite B₃ ist mit 1mm ≤ B₃ ≤ 3mm ausgebildet.

In einem Ausführungsbeispiel ist dabei die Rille 13 längs ihrer Erstreckung im ersten Erstreckungsabschnitt 14 mit konstanter Breite B₁, längs ihrer Erstreckung im zweiten Rillenarm 17 mit konstanter Breite B₂ und längs ihrer Erstreckung im ersten Rillenarm 16 ausgehend von dessen Einmündung in den zweiten Rillenarm 17 bis zum Erstreckungsende des ersten Rillenarms 16 mit abnehmender Breite B₃ ausgebildet.

Beispielsweise ist B₁ = 2mm, B₂ = 2mm und B₃ mit abnehmender Breite ausgehend von einem Maximalwert von 2mm bis zu ihrem Minimalwert 1mm gewählt ausgebildet.

Die Rille 13 erstreckt sich in ihrem ersten Erstreckungsabschnitt 14 mit ihrer maximalen in Umfangsrichtung U des Fahrzeugluftreifens gemessenen Erstreckungslänge L₁, in ihrem ersten Rillenarm 16 über eine maximale in Umfangsichtung U gemessene Erstreckungslänge L₃ und in ihrem zweiten Erstreckungsarm 17 über eine maximale in Umfangsichtung U gemessene Erstreckungslänge L₂.

Dabei sind die Erstreckungslängen L₁, L₂ und L₃ mit (0,25 B) ≤ L₁ ≤ (0,5 B), mit (0,25 B) ≤ L₂≤ (0,5 B) und mit (0,2 B) ≤ L₃≤ B ausgebildet, wobei B die in axialer Richtung A in der radial äußeren Oberfläche 19 gemessene Breite der Umfangsrippe 4 bildet.

Beispielsweise ist L₂ = (1/3) B, L₁ = (0,25 B) und L₃ = (0,5 B) gewählt.

Die Rille 13 schließt - wie in Fig.1 dargestellt - zwischen ihrer Haupterstreckungsrichtung des ersten Rillenarms 16 und ihrer Haupterstreckungsrichtung des ersten Erstreckungsabschnitt 14 einen Winkel α ein mit 45°≤α≤90°. Die Rille 13 schließt zwischen ihrer Haupterstreckungsrichtung des ersten Rillenarms 16 und ihrer Haupterstreckungsrichtung des zweiten Rillenarms 17 einen Winkel β ein mit 110° ≤ β ≤ 150°. Beispielsweise ist α = 30° gewählt und β = 120°.

Die Figuren 3, 4, 5, 6 und 7 zeigen ein weiteres Ausführungsbeispiel, bei welchem - wie in Fig.4 und Fig.5 dargestellt ist - die Rille 13 in ihrem ersten Erstreckungsabschnitt 14 und im zweiten Rillenarm 17 jeweils am Übergang zwischen ihrer - in Umfangsrichtung U vom ersten Rillenarm 16 wegweisend angeordneten - Rillenwand 22 zur radial äußeren Oberfläche 19 mit eine Fase 23 bekannter Art ausgebildet ist. Ebenso ist die Rille 13 in dieser Ausführung - wie in Fig.4 dargestellt ist - im Erstreckungsabschnitt des ersten Rillenarms 16 an beiden Rillenwänden 22 und 21 jeweils im Übergang zur radial äußeren Oberfläche 19 mit einer Fase 23 bekannter Art ausgebildet. Ebenso ist im Bereich der Einmündung die Rille 13 in die Umfangsrille 9, die zur Umfangsrippe 4 hin gerichtete Rillenwand der Umfangsrille 9 am Übergang zur radial äußeren Oberfläche 19 mit einer Fase 23 ausgebildet, wie in Fig.7 dargestellt ist.

Bei den Ausbildungen mit Fasen 23 wird die Breite der Rille 13 jeweils bis zu der Position der Schnittkante der radialen Verlängerung der mit Fase ausgebildeten Rillenwand mit der radial äußeren Oberfläche 19 bemessen.

### Bezugszeichenliste

(Teil der Beschreibung)
- 1: Umfangsrippe
- 2: Umfangsrippe
- 3: Umfangsrippe
- 4: Umfangsrippe
- 5: Umfangsrippe
- 6: Umfangsrille
- 7: Umfangsrille
- 8: Umfangsrille
- 9: Umfangsrille
- 10: Querrille
- 11: Querrille
- 12: Querrille
- 13: Querrille
- 14: Erster Erstreckungsabschnitt
- 15: Gabelstelle
- 16: Erster Rillenarm
- 17: Zweiter Rillenarm
- 18: Rillengrund
- 19: Radial äußere Oberfläche
- 20: Rillengrund
- 21: Rillenwand
- 22: Rillenwand
- 23: Fase

## Patentansprüche

1. Laufstreifenprofil eines Fahrzeugluftreifens - insbesondere eines PKW-Fahrzeugluftreifens - mit wenigstens einer Umfangsrippe (4), die in radialer Richtung R nach außen hin von einer die Bodenkontaktfläche bildenden radial äußeren Oberfläche (19) und in axialer Richtung A von zwei Umfangsrillen (8,9) begrenzt wird, wobei in der Umfangsrippe (4) querverlaufende Rillen (13) ausgebildet sind, welche sich ausgehend von der einen Umfangsrille (9) in einem ersten axialen Erstreckungsabschnitt (14) bis zu einer Gabelstelle (15) erstrecken, in welcher sich die Rille (13) in zwei Rillenarme (16,17) teilt, wobei die Rille (13) in ihrem Erstreckungsverlauf in beiden Rillenarmen (16, 17) mit Abstand zu beiden Umfangsrillen (8,9) endet, wobei die axiale Richtungskomponente der Erstreckungsrichtung der Rille (13) in ihrem ersten Erstreckungsabschnitt (14) größer ist als die Richtungskomponente in Umfangsrichtung U,
**wobei die Rille (13) im ersten (16) der beiden Rillenarme (16,17) ausgehend von der Gabelstelle (15) in Umfangsrichtung U erstreckt ausgebildet ist,**
**dadurch gekennzeichnet,**
**dass** die Rille (13) im zweiten Rillenarm (17) ausgehend von der Gabelstelle (15) mit einer Erstreckungsrichtung mit axialer Richtungskomponente und mit in Umfangsrichtung U ausgerichteter Richtungskomponente ausgebildet ist, wobei die axiale Richtungskomponente kleiner ist als die axiale Richtungskomponente der Erstreckungsrichtung der Rille (13) im ersten Erstreckungsabschnitt (14) und **dass die Rille (13) längs ihrer Erstreckung im Erstreckungsverlauf des ersten Rillenarms (16) von der Gabelstelle (15) ausgehend bis zu ihrem Erstreckungsende mit einer stetig abnehmenden Tiefe T3 ausgebildet ist.**

2. Laufstreifenprofil gemäß den Merkmalen von Anspruch 1,
wobei die Rille (13) längs ihrer Erstreckung im Erstreckungsverlauf des ersten Rillenarms (16) von der Gabelstelle (15) ausgehend bis zu ihrem Erstreckungsende mit einer kontinuierlich abnehmenden Tiefe T₃ ausgebildet ist.

3. Laufstreifenprofil gemäß den Merkmalen von Anspruch 1 oder 2,
wobei die Rille (13) längs ihrer Erstreckung im Erstreckungsverlauf des zweiten Rillenarms (17) mit einer - insbesondere konstanten - Tiefe T₂ und längs ihrer Erstreckung im ersten Erstreckungsabschnitt (14) mit einer maximalen Tiefe T₁ mit T₂ > T₁ ausgebildet ist.

4. Laufstreifenprofil gemäß den Merkmalen von Anspruch 2,
wobei die Tiefe T₃ in ihrem Maximalwert T₃ₘₐₓ mit T₃ₘₐₓ ≤ T₂ ausgebildet ist.

5. Laufstreifenprofil gemäß den Merkmalen von einem oder mehreren der vorangegangenen Ansprüche,
wobei der erste Rillenarm (16) an der Gabelstelle (15) in den zweiten Rillenarm (17) mündet.

6. Laufstreifenprofil gemäß den Merkmalen von Anspruch 5,
wobei die Rille (13) in radialer Richtung R nach innen hin durch einen Rillengrund (18) begrenzt wird,
wobei in der Position der Einmündung des ersten Rillenarms (16) in den zweiten Rillenarm (17) der Rillengrund (18) in radialer Richtung R unter Bildung einer Stufe der Stufenhöhe ΔT = (T₂-T₃ₘₐₓ) mit 0mm ≤ ΔT ≤ 1mm abgesenkt ist.

7. Laufstreifenprofil gemäß den Merkmalen von einem oder mehreren der vorangegangenen Ansprüche,
wobei die Tiefe T₂ mit 5mm≤ T₂≤ (P_{T} - 1mm) ausgebildet ist, wobei P_{T} die maximale Profiltiefe in der ersten Umfangsrille (9) ist, und
wobei insbesondere die Tiefe T₁ mit 2mm≤ T₁≤ (0,5 P_{T}) ausgebildet ist.

8. Laufstreifenprofil gemäß den Merkmalen von einem oder mehreren der vorangegangenen Ansprüche,
wobei die Tiefe T₃ am von der Gabelstelle (15) wegweisenden Erstreckungsende des ersten Rillenarms (16) mit ihrem Minimalwert T₃ₘᵢₙ mit T₃ₘᵢₙ ≥ 1mm ausgebildet ist.

9. Laufstreifenprofil gemäß den Merkmalen von einem oder mehreren der vorangegangenen Ansprüche,
wobei die Rille (13) zwischen ihrer Erstreckungsrichtung im ersten Erstreckungsabschnitt (14) und im ersten Rillenarm (16) einen Winkel α mit 45°≤α≤90° und zwischen ihrer Erstreckungsrichtung im ersten Rillenarm (16) und im zweitem Rillenarm (17) einen Winkel β mit 110°≤β≤150°einschließt.

## Claims

1. Tread strip profile of a pneumatic vehicle tyre, in particular of a passenger car pneumatic vehicle tyre, with at least one circumferential rib (4) which is delimited in the radial direction R towards the outside by a radially outer surface (19) which forms the ground contact area and in the axial direction A by two circumferential grooves (8, 9), grooves (13) which run transversely in the circumferential rib (4) being configured, which grooves (13) extend, starting from the one circumferential groove (9), in a first axial extent section (14) as far as a fork point (15), at which the groove (13) splits into two groove arms (16, 17), the groove (13) ending in its extent course in the two groove arms (16, 17) at a spacing from the two circumferential grooves (8, 9), the axial directional component of the extent direction of the groove (13) being greater in its first extent section (14) than the directional component in the circumferential direction U, the groove (13) being configured in the first (16) of the two groove arms (16, 17) so as to extend, starting from the fork point (15), in the circumferential direction U, **characterized in that** the groove (13) being configured in the second groove arm (17), starting from the fork point (15), with an extent direction with an axial directional component and with a directional component which is oriented in the circumferential direction U, the axial directional component being smaller than the axial directional component of the extent direction of the groove (13) in the first extent section (14), and **in that** the groove (13) is configured with a constantly decreasing depth T3 along its extent in the extent course of the first groove arm (16), starting from the fork point (15), as far as its extent end.

2. Tread strip profile according to the features of Claim 1, the groove (13) being configured with a constantly decreasing depth T₃ along its extent in the extent course of the first groove arm (16), starting from the fork point (15), as far as its extent end.

3. Tread strip profile according to the features of Claim 1 or 2, the groove (13) being configured with a depth T₂ which is, in particular, constant along its extent in the extent course of the second groove arm (17), and being configured with a maximum depth T₁ where T₂ > T₁ along its extent in the first extent direction (14) .

4. Tread strip profile according to the features of Claim 2, the depth T₃ being configured in its maximum value T₃ₘₐₓ where T₃ₘₐₓ ≤ T₂.

5. Tread strip profile according to the features of one or more of the preceding claims, the first groove arm (16) opening at the fork point (15) into the second groove arm (17) .

6. Tread strip profile according to the features of Claim 5, the groove (13) being delimited in the radial direction R towards the inside by way of a groove bottom (18), the groove bottom (18) being lowered, in the position of the opening of the first groove arm (16) into the second groove arm (17), in the radial direction R with the formation of a step with the step height ΔT = (T₂-T₃ₘₐₓ) where 0 mm ≤ ΔT ≤ 1 mm.

7. Tread strip profile according to the features of one or more of the preceding claims, the depth T₂ being configured such that 5 mm ≤ T₂ ≤ (P_{T} - 1 mm), P_{T} being the maximum profile depth in the first circumferential groove (9), and, in particular, the depth T₁ being configured such that 2 mm ≤ T₁ ≤ (0.5 P_{T}).

8. Tread strip profile according to the features of one or more of the preceding claims, the depth T₃ being configured with its minimum value T₃ₘᵢₙ where T₃ₘᵢₙ ≥ 1 mm at that extent end of the first groove arm (16) which points away from the fork point (15).

9. Tread strip profile according to the features of one or more of the preceding claims, the groove enclosing an angle α where 45°≤ α ≤ 90° between its extent direction in the first extent section (14) and in the first groove arm (16), and enclosing an angle β where 110° ≤ β ≤ 150° between its extent direction in the first groove arm (16) and in the second groove arm (17).

## Revendications

1. Profil de bande de roulement d'un pneumatique de véhicule, en particulier d'un pneumatique de véhicule léger, comprenant au moins une nervure périphérique (4) qui est limitée dans la direction radiale R vers l'extérieur par une surface radialement extérieure (19) formant la surface de contact au sol et dans la direction axiale A par deux rainures périphériques (8, 9), des rainures s'étendant transversalement (13) étant réalisées dans la nervure périphérique (4), lesquelles s'étendent à partir de l'une des rainures périphériques (9) dans une première portion d'étendue axiale (14) jusqu'à une zone de fourche (15) dans laquelle la rainure (13) se divise en deux bras de rainure (16, 17), la rainure (13), sur son trajet d'étendue dans les deux bras de rainure (16, 17), se terminant à distance des deux rainures périphériques (8, 9), la composante directionnelle axiale de la direction d'étendue de la rainure (13) dans sa première portion d'étendue (14) étant supérieure à la composante directionnelle dans la direction périphérique U,
la rainure (13) dans le premier (16) des deux bras de rainure (16, 17) étant réalisée de manière à s'étendre dans la direction périphérique U à partir de la zone de fourche (15),
**caractérisé en ce que**
la rainure (13) dans le deuxième bras de rainure (17) étant réalisée à partir de la zone de fourche (15) avec une direction d'étendue avec une composante directionnelle axiale et avec une composante directionnelle orientée dans la direction périphérique U, la composante directionnelle axiale étant inférieure à la composante directionnelle axiale de la direction d'étendue de la rainure (13) dans la première portion d'étendue (14), et **en ce que** la rainure (13) le long de son étendue dans le trajet d'étendue du premier bras de rainure (16) est réalisée à partir de la zone de fourche (15) jusqu'à son extrémité d'étendue avec une profondeur T₃ diminuant de manière constante.

2. Profil de bande de roulement selon les caractéristiques de la revendication 1,
dans lequel la rainure (13), le long de son étendue dans le trajet d'étendue du premier bras de rainure (16) est réalisée à partir de la zone de fourche (15) jusqu'à son extrémité d'étendue avec une profondeur T₃ diminuant en continu.

3. Profil de bande de roulement selon les caractéristiques de la revendication 1 ou 2,
dans lequel la rainure (13) le long de son étendue dans le trajet d'étendue du deuxième bras de rainure (17) est réalisée avec une profondeur T₂, en particulier constante, et le long de son étendue dans la première portion d'étendue (14), avec une profondeur maximale T₁ avec T₂ > T₁.

4. Profil de bande de roulement selon les caractéristiques de la revendication 2,
dans lequel la profondeur T₃ est réalisée avec une valeur maximale T₃ₘₐₓ avec T₃ₘₐₓ ≤ T₂.

5. Profil de bande de roulement selon les caractéristiques d'une ou plusieurs des revendications précédentes,
dans lequel le premier bras de rainure (16) au niveau de la zone de fourche (15) débouche dans le deuxième bras de rainure (17).

6. Profil de bande de roulement selon les caractéristiques de la revendication 5,
dans lequel la rainure (13) est limitée dans la direction radiale R vers l'intérieur par un fond de rainure (18),
dans la position de l'embouchure du premier bras de rainure (16) dans le deuxième bras de rainure (17), le fond de rainure (18) dans la direction radiale R étant renfoncé en formant un gradin de hauteur de gradin ΔT = (T₂ - T₃ₘₐₓ) avec 0 mm ≤ ΔT ≤ 1 mm.

7. Profil de bande de roulement selon les caractéristiques d'une ou plusieurs des revendications précédentes,
dans lequel la profondeur T₂ est réalisée de manière à satisfaire à 5 mm ≤ T₂ ≤ (P_{T} - 1 mm), P_{T} étant la profondeur de profil maximale dans la première rainure périphérique (9), et
la profondeur T₁ étant notamment réalisée de manière à satisfaire à 2 mm ≤ T₁ ≤ (0,5 P_{T}).

8. Profil de bande de roulement selon les caractéristiques d'une ou plusieurs des revendications précédentes,
dans lequel la profondeur T₃ au niveau de l'extrémité d'étendue opposée à la zone de fourche (15) du premier bras de rainure (16) est réalisée avec sa valeur minimale T₃ₘᵢₙ, avec T₃ₘᵢₙ ≥ 1 mm.

9. Profil de bande de roulement selon les caractéristiques d'une ou plusieurs des revendications précédentes,
dans lequel la rainure (13) entre sa direction d'étendue dans la première portion d'étendue (14) et dans le premier bras de rainure (16) forme un angle α tel que 45° ≤ α ≤ 90° et entre sa direction d'étendue dans le premier bras de rainure (16) et dans le deuxième bras de rainure (17), forme un angle β tel que 110° ≤ β ≤ 150°.
